(19) Europäisches Patentamt / European Patent Office / Office européen des brevets

(11) **EP 2 317 590 B1**

(12) **EUROPÄISCHE PATENTSCHRIFT**

(45) Veröffentlichungstag und Bekanntmachung des Hinweises auf die Patenterteilung:
04.05.2016 Patentblatt 2016/18

(51) Int Cl.:
*H01M 4/02* (2006.01)    *H01M 4/04* (2006.01)
*H01M 4/06* (2006.01)    *H01M 4/62* (2006.01)
*H01M 8/10* (2006.01)    *H01M 6/18* (2006.01)

(21) Anmeldenummer: **10011963.5**

(22) Anmeldetag: **15.10.1999**

(54) **VERFAHREN ZUR HERSTELLUNG EINER ELEKTROLYTSCHICHT UND BATTERIE**

METHOD FOR PREPARING AN ELECTROLYTE LAYER AND BATTERY

METHODE POUR LA PREPARATION D'UNE COUCHE D'ÉLECTROLYTE ET BATTERIE

(84) Benannte Vertragsstaaten:
**AT BE CH CY DE DK ES FI FR GB GR IE IT LI LU MC NL PT SE**

(30) Priorität: **20.10.1998 DE 19848255**
**28.02.1999 DE 19908532**

(43) Veröffentlichungstag der Anmeldung:
**04.05.2011 Patentblatt 2011/18**

(62) Dokumentnummer(n) der früheren Anmeldung(en) nach Art. 76 EPÜ:
**99952592.6 / 1 135 814**

(73) Patentinhaber: **Leclanché S.A.**
**1401 Yverdon-les-Bains (CH)**

(72) Erfinder:
• **Birke, Peter**
**25524 Itzehoe (DE)**
• **Neumann, Gerold**
**25469 Halstenbeck (DE)**

(74) Vertreter: **Sonnenberg, Fred et al**
**24IP Law Group**
**Sonnenberg Fortmann**
**Patent- und Rechtsanwälte**
**Herzogspitalstraße 10a**
**80331 München (DE)**

(56) Entgegenhaltungen:
**EP-A2- 0 820 077    WO-A1-98/18173**
**WO-A1-99/44245    JP-A- 61 181 061**
**US-A- 4 277 147    US-A- 5 456 000**
**US-A- 5 728 489**

**Beschreibung**

Die vorliegende Anmeldung betrifft neuartige Materialien mit elektrochemischen Eigenschaften, und zwar insbesondere pastöse Massen, aus diesen Massen herstellbare selbsttragende oder auf einem Substrat aufliegende, ggf. flexible Schichten und daraus hergestellte Schichtverbünde, die als Primärbatterien, Akkumulatoren, Niedertemperaturbrennstoffzellen, Solarzellen oder dergleichen verwendbar sind.

Seit Beginn der siebziger Jahre hat man versucht, elektrochemische Bauelemente wie Akkumulatoren oder dergleichen in Form dünner Schichten zu erzeugen. Das Ziel ist es, Folienverbünde zu erhalten, die durch eine extrem hohe Kontaktfläche zwischen den einzelnen elektrochemischen Bestandteilen wie Elektroden und Elektrolyten, bezogen auf das eingesetzte Volumen an elektrochemisch aktivem Material, besonders günstige Lade- und Entladeeigenschaften aufweisen. In speziellen Fällen benötigt man darüber hinaus eine hohe Flexibilität solcher Verbünde, so daß diese aufgerollt oder einer anderen gewünschten Form angepaßt werden können.

Um derartige Elektrodenmaterialien herzustellen, ist man bisher von festem oder zähflüssigem Teflon ausgegangen, welches mit einem gewissen Prozentsatz Kohlenstoff und dem eigentlichen Elektrodenmaterial gemischt und dann auf geeignete Ableitelektroden gepreßt oder aufgesprüht wurde. Dabei entstehen jedoch Schichten ungenügender Flexibilität. Des weiteren wurde vorgeschlagen, Elektrodenschichten herzustellen, die mit PVC und Tetrahydrofuran oder einem anderen in einem Lösungsmittel gelösten Polymer hergestellt wurden, aus dem das Lösungsmittel anschließend ausgetrieben wurde. Allerdings ist die Leitfähigkeit der hergestellten Produkte ungünstig.

Besondere Probleme bereitet die Herstellung einer Schicht, die in einem entsprechenden elektrochemischen Verbund als Elektrolyt fungieren kann. Die US 5 456 000 beschreibt wiederaufladbare Batteriezellen, die durch Laminierung von Elektroden- und Elektrolytzellen erzeugt werden. Als positive Elektrode wird ein Film oder eine Membran eingesetzt, die getrennt aus $LiMn_2O_4$-Pulver in einer Matrix aus einem Polymer-Copolymeren hergestellt und anschließend getrocknet wurde. Die negative Elektrode besteht aus einer getrockneten Beschichtung einer pulverisierten Kohlenstoff-Dispersion in einer Matrix eines Polymer-Copolymeren. Zwischen den Elektrodenschichten wird eine Elektrolyt/Separatormembran angeordnet. Hierfür wird ein Poly(vinylidenfluorid)-Hexafluorpropylen-Copolymeres mit einem organischen Plastifizierer wie Propylencarbonat oder Ethylencarbonat umgesetzt. Aus diesen Bestandteilen wird ein Film erzeugt, und anschließend wird der Plastifizierer aus der Schicht herausgelöst. In diesem "inaktiven" Zustand wird die Batteriezelle gehalten, bis sie ihrer Benutzung zugeführt werden soll. Um sie zu aktivieren, wird sie in eine geeignete Elektrolytlösung eingetaucht, wobei sich die durch das Austreiben des Plastifiziermittels gebildeten Kavitäten mit dem flüssigen Elektrolyten füllen. Anschließend ist die Batterie gebrauchsfertig.

Nachteilig an einem derartigen Konstrukt ist es, daß die Batterie kurz vor dem Zeitpunkt aktiviert werden muß, zu dem sie in Gebrauch genommen werden soll. Dies ist in den meisten Fällen nicht hinnehmbar.

Die WO 99/44245 offenbart eine Ionen leitende Matrix umfassend: (i) 5 bis 60 Vol% eines anorganischen Pulvers mit einer guten Absorptionskapazität eines wässrigen Elektrolyten; (ii) 5 bis 50 Vol% eines polymeren Binders der chemisch mit dem wässrigen Elektrolyten kompatibel ist; und (iii) 10 bis 90 Vol% eines wässrigen Elektrolyten, wobei das anorganische Pulver im wesentlichen submikrone Partikel umfasst. Dieses Dokument offenbart die Verwendung eines wässrigen Elektrolyten enthaltend ein Salz, eine Base oder eine Mischung daraus.

Die US 5,728,489 beschreibt ein Verfahren zur Verbesserung der strukturellen Integrität von Polymerelektrolyten einer elektrochemischen Zelle durch die Verwendung von Lithium beschichteten Zeolithen und optional anorganischen Füllmaterialien ausgewählt aus Si02, Al2O3, Ti02 und ZrO. Dieses Dokument offenbart, dass die Aktivierung der elektrochemischen Zelle vorzugsweise unter einer inerten Atmosphäre zu geschehen hat und die aktivierte Zelle dann versiegelt werden soll.

Aufgabe ist die Bereitstellung von pastösen Massen, die den entsprechenden Leiter (Ionen- oder gemischten Leiter, insbesondere den Elektrolyten oder mindestens eine der Elektroden) in flüssiger Form bereits enthalten und für die Herstellung von elektrochemisch aktivierbaren Schichten mit einem solchen flüssigen Leiter in entsprechenden, sofort einsetzbaren elektrochemischen Bauelementen geeignet sind. Diese Bauelemente sollen für eine breite Palette von Produkten wie Primärbatterien, wiederaufladbare Batterien (Akkumulatoren), Niedertemperaturbrennstoffzellen, Solarzellen, elektrochemische Sensoren oder dergleichen geeignet sein, die Schichtform, insbesondere die Form eines Folienlaminates besitzen können, sehr gute Leitungseigenschaften und ggf. eine hohe Flexibilität aufweisen und die darüber hinaus nicht auslaufen können und daher nicht notwendigerweise in Gehäusen, insbesondere in dichtenden Gehäusen, angeordnet werden müssen.

Diese Aufgabe wird dadurch gelöst, dass erfindungsgemäß ein Verfahren zur Herstellung zumindest einer Elektrolytschicht einer elektrochemischen Zelle angegeben wird, wobei das Verfahren die Schritte des Verarbeitens einer Matrix umfasst, welche mindestens ein organisches Polymer, eine Vorstufe davon oder ein Präpolymer davon enthält, eines Lösungsmittels für das mindestens ein organisches Polymer und eines pulverförmigen Feststoffs zu einer pastösen Masse; des Verfestigens der pastösen Masse und Erzeugens einer Schicht aus der pastösen Masse; des Hinzufügens einer ionenleitenden Flüssigkeit, wobei die ionenleitende Flüssigkeit ein Elektrolyt ist, dem ein Alkohol oder ein anderes polares, mit Wasser mischbares organisches Lösungsmittel bis zu einem Gehalt von nicht mehr als 70 Vol % zugesetzt werden, zu der aus der verfestigten pastösen Masse erzeugten Schicht. Diese Elektrolytschicht lässt sich zu entsprechenden selbsttragenden oder aufliegenden Schichten (z. B. Folien, sogenannten "Tapes") verarbeiten, die zu elektrochemischen Bauelementen zusammensetzbar sind oder mit anderen Bestandteilen kombiniert solche Bauelemente ergeben. In manchen Fällen werden alternativ die Massen aus den Bestandteilen (A) und ggf. (C) gebildet, dann zu Schichten verfestigt und erst danach mit dem Bestandteil (B) versehen.

Der Ausdruck "in elektrochemischen Bauelementen verwendbar" impliziert, daß die elektrochemisch aktivierbare anorganische Flüssigkeit eine ionenleitende oder elektronenleitende Flüssigkeit sein kann, die sich als flüssiges Elektrodenmaterial oder Flüssigelektrolyt eignet. Auch elektronisch leitende Flüssigkeiten, die zusätzlich ihre Stöchiometrie ändern können - was mit einem Wertigkeitswechsel und einem Ladungstransport verbunden ist - fallen darunter. Solche Flüssigkeiten können feste Interkalationselektroden ersetzen.

Die Masse erhält ihre pastöse Konsistenz durch die Verwendung einer geeigneten Matrix (A) vorzugsweise in Verbindung mit dem pulverförmigen Feststoff (C), der als Füll- und Stützmaterial dient. Der Ausdruck "pastös" soll dabei bedeuten, daß die Masse nach ihrer Herstellung mit Hilfe von gängigen Pastenauftragsverfahren verarbeitbar ist, beispielsweise aufgestrichen, aufgespachtelt, aufgerakelt oder mit diversen Druckverfahren auf einem Untergrund aufgebracht werden oder aber zu einer Folie verarbeitet werden kann. Je nach Bedarf kann sie dabei relativ dünnflüssig bis sehr zäh gehalten werden.

Für die Matrix (A) kann eine Vielzahl von Materialien verwendet werden. Dabei kann man mit lösungsmittelfreien oder lösungsmittelhaltigen Systemen arbeiten. Als lösungsmittelfreie Systeme eignen sich beispielsweise vernetzbare, ggf. flüssige, vor allem aber pastöse Harzsysteme. Beispiele hierfür sind Harze aus vernetzbaren Additionspolymeren oder Kondensationsharzen. So können beispielsweise Vorkondensate von Phenoplasten (Novolake) oder Aminoplasten eingesetzt werden, die nach Ausformen der pastösen Masse zur Schicht eines elektrochemischen Schichtverbundes endvernetzt werden. Weitere Beispiele sind ungesättigte, beispielsweise durch Pfropf-Copolymerisation mit Styrol vernetzbare Polyester, durch bifunktionelle Reaktionspartner härtbare Epoxiharze (Beispiel: Bisphenol-A-Epoxiharz, kalt gehärtet mit Polyamid), vernetzbare Polycarbonate wie durch ein Polyol vernetzbares Polyisocyanurat, oder binäres Polymethylmethacrylat, das ebenfalls mit Styrol polymerisiert werden kann. Die pastöse Masse wird dabei jeweils aus dem mehr oder weniger zähflüssigen Vorkondensat bzw. unvernetzten Polymer als Matrix (A) oder unter Verwendung wesentlicher Bestandteile davon, zusammen mit der Komponente (B), gebildet.

Eine andere Möglichkeit ist die Verwendung von Polymeren oder Polymer-Vorstufen zusammen mit einem Lösungs- oder Quellmittel für das organische Polymer. Im Prinzip besteht hier keine Beschränkung bezüglich der einsetzbaren synthetischen oder natürlichen Polymere. Nicht nur Polymere mit Kohlenstoff-Hauptkette sind möglich, sondern auch Polymere mit Heteroionen in der Hauptkette wie Polyamide, Polyester, Proteine oder Polysaccharide. Die Polymere können Homo- oder Copolymere sein; die Copolymere können statistische Copolymere, Pfropfcopolymere, Blockcopolymere oder Polyblends sein; eine Beschränkung ist hier nicht gegeben. Als Polymere mit reiner Kohlenstoff-Hauptkette sind beispielsweise natürliche oder synthetische Kautschuke verwendbar. Besonders bevorzugt sind fluorierte Kohlenwasserstoff-Polymere wie Teflon, Polyvinylidenfluorid (PVDF) oder Polyvinylchlorid, da hiermit bei den aus der pastösen Masse gebildeten Folien oder Schichten besonders gute wasserabweisende Eigenschaften erzielt werde können. Dies verleiht den damit erzeugten elektochemischen Bauelementen eine besonders gute Langzeitstabilität. Weitere Beispiele sind Polystyrol oder Polyurethan. Als Beispiele für Copolymere seien Copolymere von Teflon und amorphem Fluorpolymer sowie Polyvinylidenfluorid/Hexafluorpropylen (im Handel als Kynarflex erhältlich) genannt. Als Beispiele für Polymere mit Heteroatomen in der Hauptkette seien Polyamide vom Diamin-Dicarbonsäure-Typ oder vom Aminosäure-Typ, Polycarbonate, Polyacetale, Polyether und Acrylharze genannt. Weitere Materialien umfassen natürliche und synthetische Polysacharide (Homo- und Heteroglykane), Proteoglykane, beispielsweise Stärke, Cellulose, Methylcellulose. Auch Substanzen wie Chondroitinsulfat, Hyaluronsäure, Chitin, natürliche oder synthetische Wachse und viele andere Substanzen können eingesetzt werden. Zusätzlich können auch die vorgenannten Harze (Präkondensate) in Lösungs- bzw. Verdünnungsmitteln verwendet werden.

Lösungs- bzw. Quellmittel für die vorgenannten Polymere sind dem Fachmann bekannt.

Unabhängig davon, ob die Matrix (A) ein Lösungs- oder Quellmittel enthält oder nicht, kann ein Plastifiziermittel (auch Weichmacher) für das bzw. die eingesetzten Polymere vorhanden sein. Unter "Plastifizierer" oder "Weichmacher" sollen hier Substanzen verstanden werden, deren Moleküle durch Nebenvalenzen (Van-der-Waals-Kräfte) an die Kunststoffmoleküle gebunden werden. Sie verringern dadurch die Wechselwirkungskräfte zwischen den Makromolekülen und setzen damit die Erweichungstemperatur und die Sprödigkeit und Härte der Kunststoffe herab. Dies unterscheidet sie von Quell- und Lösungsmitteln. Aufgrund ihrer höheren Flüchtigkeit lassen sie sich üblicherweise auch nicht durch Abdampfen aus dem Kunststoff entfernen, sondern müssen ggf. durch ein entsprechendes Lösungsmittel herausgelöst werden. Das Einarbeiten eines Plastifizierers bewirkt eine hohe mechanische Flexibilität der aus der pastösen Masse erzeugbaren Schicht.

Der Fachmann kennt geeignete Weichmacher für die jeweiligen Kunststoffgruppen. Sie müssen mit dem Kunststoff, in den sie eingearbeitet werden sollen, gut verträglich sein. Gängige Weichmacher sind hochsiedende Ester der Phthalsäure oder der Phosphorsäure, beispielsweise Dibutylphthalat oder Dioctylphthalat. Weiterhin eignen sich beispielsweise Ethylencarbonat, Propylencarbonat, Dimethoxyethan, Dimethylcarbonat, Diethylcarbonat, Butyrolacton, Ethylmethylsulfon, Polyethylenglykol, Tetraglyme, 1,3-Dioxolan oder S,S-Dialkyldithiocarbonat.

Die Zugabe von Feststoff (C) dient unter anderem einer Verbesserung der Eigenschaften der Matrix (A), z.B. in Bezug auf deren Stützung oder das Verhalten beim Ziehen des Tapes. Der Feststoff (C) sollte in fein verteilbarer Form (z.B. als Pulver) eingesetzt werden. Es eignen sich alle Substanzen, die von der Flüssigkeit (B) nicht angegriffen, insbesondere auch oxidativ/reduktiv nicht verändert werden. Da diese häufig chemisch sehr aggressiv ist, wird man vorwiegend Substanzen wie $SiO_2$, $Si_3N_4$, $Al_2O_3$, AlN, MgO und dergleichen verwenden. Es sind aber auch alle anderen Substanzen verwendbar, die gegenüber dem jeweils eingesetzten Elektrolyten oder Elektrodenmaterial inert sind.

Die als Elektrode, Elektrolyt oder dergleichen einzusetzende Flüssigkeit soll, zumindest in wesentlichen Teilen, anorganischer Natur sein. Als Elektrodenmaterial kann beispielsweise Vanadiumoxichlorid oder -bromid zur Verwendung kommen, bei dem sich die Oxidationsstufe des Vanadiums über VOX, $VOX_2$, $VO_2X$ von +III nach +V erhöhen kann. Mit derartigen Materialien lassen sich Zersetzungselektroden erhalten, die im Vergleich zu Interkalationselektroden den Vorteil aufweisen, daß sie die für Interkalationselektroden typische Volumenausdehnung nicht aufweisen. Hierdurch läßt sich eine verbesserte Alterungsbeständigkeit erzielen.

Als Elektrolytmaterial kann im Prinzip jeder für das jeweilige System geeignete flüssige Elektrolyt verwendet werden; eine Vielzahl solcher Systeme und entsprechender Elektrolyte ist bekannt. So können wäßrige Systeme wie Schwefelsäure bzw. KOH als protonenleitende Elektrolyte in Systemen wie Bleiakkumulatoren oder Ni-Pb-Akkumulatoren bzw. Nickel-Cadmium- bzw. Nickelmetall-hydrid-Akkumulatoren eingesetzt werden, wodurch sich vorteilhafte Packungsdichten erreichen lassen.

Um den Transport der leitenden Flüssigkeit in der möglicherweise wasserabweisenden Matrix zu erleichtern, wird dem Elektrolyten erfindungsgemäss ein Alkohol oder ein anderes polares, mit Wasser mischbares organisches Lösungsmittel zugesetzt werden. Geeignet sind hier besonders gerad- oder verzweigtkettige Mono-, Di- oder Trialkohole mit bevorzugt 1-6 Kohlenstoffatomen wie Methanol, Ethanol, Propanol, Glykol, Glycerin oder dergleichen. Insbesondere dann, wenn eine Polymermatrix mit Plastifizierer eingesetzt wird, der aus der Polymermatrix wieder herausgelöst wurde, netzt eine derartige wäßrige Mischung die - ggf. vernetzte - Matrix in der fertigen Schicht leicht, so daß der Transport erleichtert wird. Es sollte jedoch klar sein, daß der Ausdruck "im wesentlichen anorganische Flüssigkeit" ausschließen soll, daß der Elektrolyt im wesentlichen oder ganz aus einem Salz und einem rein organischen Lösungsmittel wie Ethylcarbonat, Diethoxyethan oder dergleichen besteht. Der Gehalt an organischem Lösungsmittel ist daher nicht mehr als 70 Vol.-%, bevorzugt 50 Vol.-% der gesamten Lösungsmittelmenge ausmachen. Je nach Eigenschaft der Matrix und/oder des organischen Lösungsmittels sind auch beispielsweise max. 30 oder 15 Vol.-% davon ausreichend.

In einer Alternative kann das Matrixmaterial einen Weichmacher oder Plastifizierer enthalten, der mit Wasser mischbar ist. Dadurch erhöht sich die Hydrophilie des Matrixmaterials mit derselben Folge. Für die Maximalmenge des organischen Zusatzes gilt hier das vorstehend Gesagte. In einer weiteren Variante kann dem Matrixmaterial ein hygroskopisches Salz, z.B. $MgCl_2$, beigemischt werden. Dieses zieht Wasser in die Matrix, mit der gleichen Folge, daß der Transport des Elektrolyten durch die Matrix erleichtert wird.

Bei den Elektrolyten kann es sich neben wäßrigen Systemen auch um wasserfreie, flüssige anorganische Elektrolyte wie $H_2SO_4$ oder $LiAlCl_4/SO_2$ handeln (letzteres System entsteht bei der Einwirkung von gasförmigem Schwefeldioxid auf Lithiumaluminiumchlorid). Auch solche Systeme haben eine relativ hohe Oberflächenspannung gegenüber stärker hydrophoben Polymermatrices. Um auch ihre Wanderung durch die Polymermatrix zu erleichtern, bietet sich wiederum eine Reihe von Maßnahmen an, vor allem die beiden für wäßrige Elektrolyte erstgenannte Varianten, nämlich der Zusatz von Alkohol oder dergleichen zum Elektrolyten und/oder der Zusatz von Plastifizierer zur Polymermatrix.

Die vorliegenden, pastösen Massen und daraus hergestellten Schichten eignen sich, wie bereits erwähnt, für eine Vielzahl elektrochemischer Bauelemente, die vorzugsweise als Folien-Schichtverbund gestaltet sind. Der Fachmann kann hierfür dieselben Flüssigkeiten (B) auswählen, die er für klassische elektrochemische Bauelemente, d.h. solche ohne den Zusatz von Kunststoffen, verwenden würde.

Beispielhaft seien nachstehend mögliche Bestandteile eines Akkumulators in Lithiumtechnologie genannt:

| | |
|---|---|
| - untere Ableitelektrode | Al, Cu, Pt, Au, C |
| - positive Elektrode | LiF, $Li_xNiVO_4$, $Li_x[Mn]_2O_4$, $LiCoO_2$, $LiNiO_2$, $LiNi_{0,5}Co_{0,5}O_2$, $LiNi_{0,8}Co_{0,2}O_2$, $V_2O_5$, $Li_xV_6O_{13}$ |
| - Elektrolyt | $LiAlCl_4/SO_2$ (wasserfrei) |
| - Negative Elektrode | Li, $Li_{4+x}Ti_5O_{12}$, $Li_xMoO_2$, $Li_xWO_2$, $Li_xC_{12}$, $Li_xC_6$, Lithiumlegierungen |
| - obere Ableitelektrode | Al, Cu, Mo, W, Ti, V, Cr, Ni |

Während die Elektrolytschicht dieses Akkumulators aus einer pastösen Masse gemäß der vorliegenden Erfindung gebildet werden kann, lassen sich die anderen Schichten ggf. ebenfalls mit Hilfe pastöser Massen erzeugen, in denen anstelle einer Flüssigkeit (B) pulverförmiges Elektrodenmaterial eingearbeitet wird. Das Elektrodenmaterial ist dabei bevorzugt in der Polymermatrix nicht löslich. Besonders bevorzugt wird dabei ein Verhältnis von Elektrodenmaterial zu Polymermatrix von annähernd 70 zu 30 Gew.-% eingehalten. Die Polymermatrix kann die gleichen Bestandteile aufweisen wie oben für die erfindungsgemäßen Massen beschrieben.

Die vorliegende Erfindung ist aber selbstverständlich nicht auf Akkumulatoren in Lithiumtechnologie beschränkt. Wie oben erwähnt, ist eine Vielzahl von Anwendungen möglich. So können die erfindungsgemäßen Massen zu selbsttragenden Folien oder auf Substraten aufliegenden Schichten verarbeitet werden, die in Primär- oder Sekundärbatterien, Zersetzungsbatterien, Niedertemperaturbrennstoffzellen, Solarzellen oder elektrochemischen Sensoren einsetzbar sind.

Die vorstehend beschriebenen Bestandteile, aus denen die pastöse Masse hergestellt wird, können auf konventionelle Art und Weise vermischt werden, vorzugsweise durch heftiges Rühren oder Verkneten der Bestandteile. Gegebenenfalls werden das organische Polymer oder seine Vorstufen im Lösungs- oder Quellmittel vorgelöst oder vorgequollen, bevor die Komponenten (B) und ggf. (C) zugegeben werden. Die Komponente (C) wird, wenn vorgesehen, mit der Komponente (A) vorzugsweise vor einer Verfestigung der Matrix zur genannten pastösen Masse verarbeitet. Auch die Komponente (B) kann bereits in diesem Stadium zugegeben werden. Alternativen hierzu werden weiter unten beschrieben.

Die pastösen Massen eignen sich insbesondere für das Erzeugen von Dünnfilm-Batterien und anderen entsprechenden elektrochemischen Bauelementen wie z.B. elektrochemische Sensoren. Bevorzugt handelt es sich um Bauelemente in der sogenannten "Dickschicht-Technologie". Die einzelnen Schichten dieser Elemente werden auch "Tapes" genannt. Hierfür werden einzelne elektrochemisch aktive bzw. aktivierbare Schichten in einer Dicke von etwa 10 $\mu$m bis etwa 1 bis 2 mm erzeugt, aufeinander aufgelegt und in innigen Kontakt gebracht. Der Fachmann wird die der Anwendung gemäße Dicke jeweils entsprechend auswählen. Bevorzugt sind Bereiche von etwa 50 $\mu$m bis 500 $\mu$m, ganz besonders bevorzugt ein Bereich von etwa 100 $\mu$m. Es ist erfindungsgemäß allerdings auch möglich, entsprechende Dünnschicht-Bauelemente herzustellen (dieser Begriff umfaßt Dicken von vorzugsweise 100 nm bis zu einigen $\mu$m). Diese Anwendung dürfte aber beschränkt sein, da entsprechende Bauelemente den gängigen Kapazitätanforderungen in einer Vielzahl von Fällen nicht genügen dürften. Denkbar ist allerdings die Anwendung beispielsweise für Backup-Chips.

Darüber hinaus können die pastösen Massen auch in andere Formen gebracht werden. So lassen sich dickere Schichten (beispielsweise im Bereich von etwa 1 bis 10 mm) erzeugen, aus denen ggf. auch Formen gestanzt oder geschnitten werden können. Letztere eignen sich beispielsweise für Batterien und Akkumulatoren in der Medizintechnik, die sehr klein und gleichzeitig sehr sicher sein müssen. Ein Anwendungsbeispiel sind Hörgerätebatterien. Diese werden entweder dicht am oder im Ohr getragen oder sogar implantiert, so daß hier neben der Kleinräumigkeit besonders hohe Anforderungen an die Auslaufsicherheit gestellt werden müssen. Selbstverständlich können die genannten Formen auch direkt erzeugt werden, z.B. durch Gießen, Spritzgießen oder Extrusionsverfahren.

Die vorliegende Anmeldung umfaßt daher weiterhin selbsttragende oder auf einem Substrat aufliegende, elektrochemisch aktive bzw. aktivierbare Schichten, bevorzugt in den angegebenen Dicken, die aus den voranstehend beschriebenen pastösen Massen erzeugt werden können. Die Schichten sind vorzugsweise flexibel.

Zur Erzeugung sowohl der selbsttragenden Schichten (Folien, Tapes) als auch der auf einem Substrat aufliegenden Schichten kann auf die üblichen, im Stand der Technik bekannten Verfahren zurückgegriffen werden, die für die entsprechenden Polymermaterialien der Matrix anwendbar sind. Die Verfestigung der pastösen Massen erfolgt dabei je nach Material beispielsweise durch Härten (von Harzen oder anderen Präkondensaten), durch Vernetzen von Präpolymerisaten oder linearen Polymerisaten, durch Abdampfen von Lösungsmittel (z. B. Aceton oder dergleichen) oder auf ähnliche Art und Weise. Wenn die Polymermatrix einen Plastifizierer enthält, kann die pastöse Masse während des Entweichens des Lösemittels besonders günstig ausreichend viskos gehalten werden, so daß die homogene Verteilung der Bestandteile erhalten bleibt. Wenn eine Ausgestaltung vergesehen ist, in der der Plastifizierer keine weiteren Aufgaben erfüllen soll (wie z. B. die Erhöhung der Hydrophilie des Matrixmaterials), kann er anschließend an die Verfestigung der pastösen Masse zu einer selbsttragenden oder aufliegenden Schicht gegebenenfalls wieder entfernt werden, sofern die Polymermatrix nicht zu einer starken Kristallisation und daraus resultierenden Brüchigkeit und mangelnden Flexibilität neigt. Ein Beispiel für ein ausreichend flexibles Polymer ist die Kombination von Polyvinylidenfluorid mit Hexafluorpropylen als Polymer/Copolymer.

In einer speziellen Ausgestaltung wird die Komponente (B) noch nicht oder nur teilweise bei der Herstellung der pastösen Masse zugesetzt. Wenn nämlich, wie voranstehend beschrieben, der Plastifizierer nach der Verfestigung der Masse aus der entstandenen, selbsttragenden oder aufliegenden Schicht wieder entfernt wird (z. B. durch Austreiben nach Zusatz eines Lösungsmittels wie Hexan), bilden sich in der verfestigten Matrix Kavitäten, vergleichbar einem Schwamm. Durch Eintauchen in eine Flüssigkeit (B) kann diese dann, unterstützt von Kapillarkräften, in die entstandenen Hohlräume aufgesaugt werden und darin stabil verbleiben.

Um Folien zu erhalten, die selbsttragend sind, kann beispielsweise eine geeignete pastöse Masse auf Kalandern in der geeigneten Dicke ausgeformt werden. Hier kann auf Standardtechnologie verwiesen werden. Selbsttragende Schichten können auch durch Auftragen der pastösen Masse auf ein Substrat und Abziehen der erzeugten Schicht nach ihrer Verfestigung gebildet werden. Voraussetzung ist dabei jeweils, daß das Produkt eine ausreichende Flexibilität besitzt. Die Beschichtung kann mit üblichen Pastenauftragsverfahren durchgeführt werden. Beispielhaft sei hier das Aufstreichen, Aufrakeln, Aufspritzen, Spincoating und dergleichen genannt. Auch Drucktechniken sind möglich. Die Flüssigkeit (B) kann dabei wie voranstehend beschrieben entweder bereits in die pastöse Masse eingearbeitet werden oder aber nach Verfestigen einer aus zumindest der Polymermatrix (A) und dem Füllstoff (C) bestehenden pastösen Masse und Entfernen des darin enthaltenen Weichmachers in die entstehenden Kavitäten gefüllt werden.

In einer bevorzugten Ausgestaltung werden vernetzbare Harzmassen (Präkondensate), wie weiter oben für die pastösen Massen beschrieben, eingesetzt und nach Ausformen der Schicht durch UV- oder Elektronenbestrahlung ausgehärtet. Eine Härtung kann natürlich auch thermisch oder chemisch (beispielsweise durch Eintauchen der erzeugten Schicht in ein entsprechendes Bad) bewirkt werden. Gegebenenfalls werden den Massen geeignete Initiatoren oder Beschleuniger oder dgl. für die jeweilige Vernetzung zugesetzt.

Die vorliegende Anmeldung betrifft weiterhin Schichtverbünde mit elektrochemischen Eigenschaften, wie insbesondere Akkumulatoren und andere Batterien oder Sensoren, die durch eine entsprechende Abfolge der obengenannten Schichten gebildet werden oder diese umfassen.

Figur 1 zeigt eine möglichen Abfolge einer solchen Anordnung. Die Bezugsziffern bedeuten: Ableitelektrode 1, Zwischentape 2, Elektrode 3, Elektrolyt 4, Elektrode 5, Zwischentape 6 und Ableitelektrode 7. Näheres hierzu ist im nachfolgenden Text erläutert.

Für die Herstellung von Schichtverbünden können die einzelnen pastösen Massen Lage für Lage aufeinander mittels Pastenauftragsverfahren aufgebracht werden. Dabei kann entweder jede einzelne Lage für sich vernetzt oder von Lösungsmittel befreit oder auf sonstige Weise in die Schichtform gebracht werden; es kann aber auch eine Verfestigung der einzelnen Matrices durch Vernetzung oder Abdampfen des Lösungs- oder Quellmittels oder dergleichen nach Beendigung des Auftragens aller benötigten Schichten vorgenommen werden. Letzteres ist beispielsweise dann vorteilhaft, wenn die einzelnen elektrochemisch aktivierbaren Schichten mit einem Druckverfahren aufgetragen werden, das analog zu einem Vielfarbendruck erfolgt. Als Beispiel hierfür sei die Flexodruck-Technik erwähnt, mit deren Hilfe kontinuierlich mehrere Meter/Sekunde eines Substrats mit den erforderlichen elektrochemisch aktivierbaren Schichten bedruckt werden können.

Alternativ kann jede Schicht oder Folie einzeln in ihren endverfestigten Zustand überführt werden. Handelt es sich um selbsttragende Folien, so können die entsprechenden Bestandteile des zu bildenden Bauelementes anschließend durch Laminierung miteinander verbunden werden. Hierfür können konventionelle Laminiertechniken eingesetzt werden. Genannt sei hier beispielsweise das Extrusionsbeschichten, wobei die zweite Schicht durch Anpreßwalzen mit einer Trägerschicht verbunden wird, Kalanderbeschichten mit zwei oder drei Walzspalten, worin neben der pastösen Masse die Trägerbahn mit einläuft, oder Doublieren (Verbinden unter Druck und Gegendruck von bevorzugt erhitzten Walzen). Der Fachmann wird die entsprechenden Techniken ohne weiteres auffinden, die sich durch die Wahl der Matrices für die jeweiligen pastösen Massen ergeben oder anbieten.

Ein Preßvorgang während des Verbindens (Laminierens) der einzelnen Schichten kann häufig erwünscht sein, z.B. zum besseren Verbinden (und damit dem Erzielen einer besseren Leitfähigkeit) der einzelnen Schichten. Hierfür sind gängige Techniken anwendbar. Vorteilhaft kann eine Kaltverpressung (bei Temperaturen unter 60°C) erfolgen, sofern die eingesetzten Materialien dies erlauben. Ein besonders guter Kontakt der einzelnen Schichten untereinander wird dadurch gewährleistet.

Der Vorteil der Verwendung der erfindungsgemäßen pastösen Massen bzw. der daraus hergestellten selbsttragenden Folien oder auf einem Substrat aufliegenden Schichten ist bei allen Anwendungen die Kostengünstigkeit, die hohe praktische Energiedichte durch den kompakten Aufbau sowie eine hohe Auslaufsicherheit, da der flüssige Elektrolyt oder die flüssige Elektrode in der Polymermatrix wie in einem Schwamm gebunden ist.

Die elektrochemischen Bauteile, die mit den erfindungsgemäßen pastösen Massen herstellbar sind, sind nicht beschränkt. Die nachstehend beschriebenen Ausgestaltungen sind daher nur als Beispiele oder besonders bevorzugte Ausgestaltungen zu verstehen.

So können wiederaufladbare elektrochemische Zellen in Dickschichttechnologie hergestellt werden, d. h. mit einzelnen, elektrochemisch aktivierbaren Schichten in einer Dicke von etwa 10 $\mu$m bis etwa 1 bis 2 mm und bevorzugt von etwa 100 $\mu$m. Wenn die elektrochemische Zelle auf der Lithiumtechnologie basieren soll, bieten sich als Flüssigkeiten für die Elektrolytschichten bzw. Festsubstanzen für die Elektrodenschichten diejenigen Substanzen an, die bereits voranstehend hierfür aufgezählt sind. Dabei sind mindestens drei Schichten vorzusehen, nämlich eine solche, die als positive Elektrode fungiert, eine, die als Festkörperelektrolyt fungiert, und eine, die als negative Elektrode fungiert, d.h. die Schichten 3, 4 und 5 der Figur 1.

Es hat sich herausgestellt, daß besonders vorteilhafte Stromdichten im Akkumulator erzielt werden, wenn gewisse Grenzbedingungen eingehalten werden. Die Stromdichte läßt sich bekanntlich durch den Widerstand des Elektrolyten einstellen. Ist sie zu hoch gewählt, so können die Elektroden durch Polarisation langfristig zerstört werden; ist sie zu niedrig, so ist die Leistung des hergestellten Akkumulators nur für wenige Einsatzgebiete ausreichend. Die genannte Grenzbedingung liegt vorzugsweise bei 1 mA/cm$^2$. Wenn die Elektrolytschicht etwa 100 $\mu$m dick ist, ruft eine Stromdichte von 1 mA/cm$^2$ einen durch den Widerstand bedingten Spannungsabfall von vernachlässigbaren 0,1 V hervor. Wenn beispielsweise ein Elektrolyt eine Leitfähigkeit von 10$^1$ S/cm besitzt, wird durch die Mikro-Geometrie in der Schicht (Füllstoff und Kanäle) die auf die Schicht bezogene Leitfähigkeit etwa bei 10° S/cm liegen. Ein sehr empfehlenswertes Kriterium ist es, die Schichtdicke d im Verhältnis zur Leitfähigkeit $\sigma_{ion}$ und einem ionischen Widerstand ($\Omega$) und in Bezug auf die Fläche A so zu wählen, daß die folgende Formel erfüllt wird:

$$200 \; \Omega < d/(\sigma_{ion} \cdot A).$$

Dieses Kriterium läßt sich bei Einsatz der "Tapes" in hervorragender Weise einhalten.

Die genannte dreischichtige Zelle (oder jedes beliebige andere elektrochemische Bauelement, bestehend aus positiver Elektrode/Elektrolyt/negativer Elektrode) kann zusätzlich mit Ableitelektroden (Schichten 1 und 7 der Figur 1) versehen sein. Diese bestehen zweckmäßigerweise aus Folien der geeigneten Materialien (Materialien für Ableitelektroden, die in der Lithiumtechnologie verwendet werden können, sind weiter vorne beschrieben).

In einer speziellen Ausgestaltung wird zwischen die untere Ableitelektrode und die ihr benachbarte Elektrode sowie die obere Ableitelektrode und die ihr benachbarte Elektrode eine weitere dünne Kunststoffschicht ("Zwischentape", Schichten 2 und 6 der Figur 1) eingearbeitet, die ebenfalls mit Hilfe einer pastösen Masse hergestellt sein kann. Diese dünne Kunststoffschicht sollte leitende, metallische Elemente oder Legierungen aus solchen Elementen enthalten, die geeignet sind, Elektronen vom jeweiligen Elektrodenmaterial auf die jeweilige Ableitelektrode zu transportieren. Beispiele hierfür sind die Elemente Gold, Platin, Rhodium und Kohlenstoff oder Legierungen aus diesen Elementen, wenn die Kunststoffschicht zwischen positiver Elektrode und zugehöriger Ableitelektrode angeordnet werden soll. Wenn sie zwischen negativer Elektrode und Ableitelektrode angeordnet werden soll, sind als Elemente Nickel, Eisen, Chrom, Titan, Molybdän, Wolfram, Vanadium, Mangan, Niob, Tantal, Kobalt oder Kohlenstoff zu nennen. Für die Konzentration und den Aufbau der pastösen Massen, aus denen diese Schichten gebildet werden, gilt das voranstehend für die Elektroden und Elektrolyte Gesagte selbstverständlich ebenfalls. Eine Ausgestaltung mit Ableitelektroden und Zwischentapes (siehe auch Figur 1) besitzt, wenn sie in der erwähnten Lithiumtechnologie mit LiAlCl$_4$/SO$_2$ als Elektrolyt hergestellt ist, Lade- und Entladekurven, wie sie in Figur 3 dargestellt sind.

In einer anderen speziellen Ausgestaltung wird eine elektrochemische Zelle aus mindestens drei Schichten bereitgestellt, wobei beide Elektroden als erfindungsgemäße Schichten ausgebildet sind und die positive Seite (Elektrode) ein protisches System darstellt, während die negative Seite (Gegenelektrode) ein aprotisches System darstellt. Unter "protisch" ist hier ein System zu verstehen, in dem ein Salz, z. B. ein Lithiumsalz wie Lithiumnitrat oder Lithiumperchlorat in einem "protischen", d. h. protonenabspaltenden System (H$_2$O) gelöst ist. Entsprechend wird für die Zwischenschicht ein fester Elektrolyt gewählt, dessen Kation (z. B. Lithium) Leitungsion ist. Vor allem durch die wasserabweisenden Eigenschaften der Polymermatrix wird in dieser speziellen Ausgestaltung verhindert, daß Wasser auf die negative Seite gelangt und dort zersetzt wird. Vorteile sind die durch den flüssigen Elektrolyten erhöhte Kinetik in der positiven Elektrode sowie die breite Auswahl an möglichen Elektrolyten (hier wird das Problem des Korrosionspotentials der positiven metallischen Ableitelektrode umgangen, für die man aus Kostengründen gerne Aluminium wählt; z.B. Lithiumperchlorat enthaltende Elektrolyte oxidieren leicht die Ableitelektrode an der positiven Seite).

Die Massen eignen sich u.a. zur Verwendung in Primärbatterien, wobei sie sich vor allem für die Herstellung der Elektrolytschichten eignen. Geeignete Elektrodensysteme hierbei sind z.B: Zink-Kohle, Alkali-Mangan (Zn-MnO$_2$), Zink-Quecksilberoxid (Zn-HgO), Zink-Silberoxid (Zn-Ag$_2$O), Zink-Luftsauerstoff (Zn-O$_2$), Magnesium-Luftsauerstoff (Mg-O$_2$), Aluminium-Luftsauerstoff (Al-O$_2$). Als Elektrolyte bieten sich alkoholische Lösungen von Alkali- und Ammoniumbromiden und -chloriden oder Alkalihydroxiden (vor allem der Alkalimetalle Natrium und Kalium) an.

Die Massen eignen sich weiterhin zur Verwendung in Sekundärbatterien. Einige derartige Systeme wie der Bleiakkumulator und die Nickel-Metallhydridzelle wurden voranstehend bereits erwähnt; ergänzend seien die Systeme Nickel-Cadmium, Nickel-Eisen, Zink-Silberoxid sowie die Alkali-Mangan-Sekundärzelle genannt. Geeignete Elektrolyte hierfür sind z.B. wäßrige oder wasserfreie H$_2$SO$_4$ (z. B. für den Bleiakku) oder Kalilauge.

Auch für einen neuen Typus von Batterien lassen sich die Massen einsetzen, nämlich die sogenannte Zersetzungsbatterie. Hierbei wird ein Salz in der positiven Elektrode zersetzt, beispielsweise MgBr$_2$, und das entstehende Brom wird in einer Kohlenstofffolie ("Kohlenstofftape") gespeichert. Der Elektrolyt der pastösen Masse bzw. der daraus hergestellten Folie oder Schicht ist in diesem Falle MgCl$_2$, das nicht zersetzt wird, da seine Zersetzungsspannung höher liegt als die von MgBr$_2$. Als negative Elektrode wird Mg in situ in einer Metallfolie oder Kohlenstofffolie, die als Schwamm fungieren, abgeschieden. Alternativ kann das Magnesium an der Oberfläche der genannten Materialien abgeschieden werden, wenn diese in geschlossener Form vorliegen; erstere Variante ist jedoch wegen der günstigeren Volumenverhältnisse bevorzugt. Die Zellspannung ist gleich der Zersetzungsspannung von MgBr$_2$. Besonders vorteilhaft an derartigen Akkumulatoren ist, daß sich hier höherwertige Ionen einsetzen lassen, da sich die Kapazität mit der Wertigkeit multipliziert. Insbesondere werden die leichten und kostengünstigen Elemente Mg und Al zugänglich. In diesen Systemen sollten anorganische, wäßrige oder zumindest flüssige Elektrolyte eingesetzt werden, da die Beweglichkeit höherwertiger Ionen bei Raumtemperatur in Festelektrolyten zu gering für Batterie- und Akkumulatorenanwendungen ist. Die Elektroden können entweder als Metall- oder Kohlenstoffolie oder aber als pulverförmiges Elektrodenmaterial vorliegen, das in eine folienförmige Polymermatrix eingebettet ist, wie bereits zuvor beschrieben.

Ein weiteres Einsatzgebiet der pastösen Massen sind Niedertemperaturbrennstoffzellen. Hier hat man bisher protonenleitende Polymerelektrolyte (PEM: Proton Exchange Membrane) wie Nafion verwendet. Dieser Polymerelektrolyt ist jedoch teuer und empfindlich gegen Austrocknung. Insbesondere gibt es auch keine einfache Wiederaufladung der Brennstoffzelle; in der Regel muß der Wasserstoffspeicher, der als kleine und teure Stahlflasche vorliegt, komplett ausgetauscht werden. Der Platzbedarf eines solchen Wasserstoffspeichers hat bisher die Ausgestaltung derartiger Zellen als Struktur dünner Schichten unmöglich gehalten. Erfindungsgemäß wird nun vorgesehen, eine Elektrolytschicht unter Verwendung einer Polymermatrix einzusetzen, in die ein hygroskopisches Salz eingearbeitet ist, und diese Schicht in einer feuchtigkeitshaltigen Umgebung zu halten. Durch das Zerfließen des Salzes enthält diese Schicht einen Flüssigelektrolyten (das genannte Salz im aufgenommenen Wasser), und das Wasser kann elektrochemisch zersetzt werden. Der entstehende Wasserstoff wird dann in einem weiteren, auflaminierten Hydridspeicher (Y, Pt, Pd, oder ein anderes wasserstoffaufnehmendes Material in Folienform, bevorzugt in einer organischen Polymermatrix) gespeichert. Der Wasserverlust durch Zersetzung wird durch Nachziehen von Feuchtigkeit durch das hygroskopische Salz immer wieder ausgeglichen.

Auch in dieser Ausgestaltung kann eine Elektrolytschicht verwendet werden, die durch Vermischen von Polymer, Lösemittel und Weichmacher für die Polymermatrix (A) sowie Festsubstanz (C) zu einer pastösen Masse, Überführen dieser Masse in die gewünschte "Tape"-Form, Verfestigen der Form und bzw. durch Entfernen des Lösemittels, Herauslösen des Weichmachers und "Befüllen" der entstandenen Kavitäten mit der alkoholischen Lösung des hygroskopischen Salzes erzeugt wird, worauf der Alkohol verdampft wird. Alternativ kann das Salz, z.B. zusammen mit Alkohol als Lösungsvermittler, im Lösemittel oder Plastifizierer gelöst in die pastöse Masse eingearbeitet werden. In diesem Fall wird der Alkohol bevorzugt zusammen mit dem Lösemittel ausgetrieben. Der Füllstoff (C) ist hier vorzugsweise vergesehen, um die mechanische Stabilität des entstandenen, membranartigen Tapes zu verbessern. Er kann gegebenenfalls weggelassen werden.

Auch für Solarzellen lassen sich die erfindungsgemäßen pastösen Massen und die daraus hergestellten Folien oder Schichten einsetzen. Das System, auf dem diese Solarzellen basieren, nutzt bevorzugt nicht die Silicium-Technologie, sondern den sogenannten Honda-Fujishima Effekt (1972). Oxide wie Titandioxid oder Wolframtrioxid sind in der Lage, bei Bestrahlung mit Sonnenlicht Wasser oder auch andere Substanzen wie Ameisensäure zu zersetzen (zu elektrolysieren). Dies liegt darin begründet, daß Elektronen in das Leitungsband angeregt werden und die verbliebenen Löcher hochoxidierend wirken, da bereits Oxide in dem der Chemie bekannten höchsten Oxidationszustand vorliegen. Die Solarzellen umfassen drei Schichten ("Tapes"), und zwar eine wasserstoffspeichernde, die wie für die Niedertemperaturbrennstoffzelle beschrieben aufgebaut sein kann, eine ElektrolytSchicht, die Wasser enthält, das im Betrieb zersetzt wird und deshalb ebenfalls wie für die Brennstoffzelle beschrieben ausgestaltet sein kann, sowie ein zusätzlich $TiO_2$ oder $WO_3$ und vorzugsweise ein Metallpulver oder Kohlenstoff (zur Gewährleistung ausreichender elektronischer Leitfähigkeit) enthaltendes Tape, das ansonsten analog zum Elektrolyttape aufgebaut ist. Im Gegensatz zur Brennstoffzelle wird die Solarzelle mit Licht "geladen". Während der Entladung arbeitet sie wie eine Brennstoffzelle.

Die pastösen Massen und daraus hergestellte Folien oder Schichten sind ferner auch für elektrochemische Sensoren geeignet. Eine Polymermatrix wird für die Anwendung mit einem hygroskopischen Salz versetzt, das Wasser zieht. Über die Salzkonzentration, die Umgebungsfeuchte und die Temperatur läßt sich der Wassergehalt in einer aus der Masse hergestellten Folie sehr fein einstellen. Gegenüber einer Referenzelektrode, die als dagegenlaminiertes Tape ausgebildet ist, treten unterschiedliche Spannungen als Funktion des Feuchtigkeitsgehaltes auf und erlauben so eine Feuchtigkeitsmessung.

Die elektrochemischen Bauelemente der vorliegenden Anmeldung können beispielsweise in einem kunststoffbasierten Gehäuse versiegelt werden. Gegenüber Metallgehäusen wird hier das Gewicht vorteilhaft verringert; Vorteile ergeben sich weiterhin für die Energiedichte.

Der elektrochemische Schichtverbund (das elektrochemische Bauelement) kann auch zwischen zwei oder mehr Folien aus einem mit Wachs oder Paraffin beschichteten Kunststoff eingebettet werden. Diese Materialien wirken als Versiegelung und können zusätzlich aufgrund ihrer inhärenten Eigenschaften mechanischen Druck auf den Schichtverbund ausüben, wodurch in vorteilhafter Weise eine Kontaktverbesserung im Schichtverbund durch Preßwirkung erzielt wird.

Wenn das elektrochemische Bauelement wie vorstehend oder auf andere Weise versiegelt wird, kann man das Innere mit einem vorgegebenen Wasser-/Sauerstoff-Partialdruck beaufschlagen, der eine hohe elektrochemische Stabilität bewirkt. Dies läßt sich beispielsweise durch das Versiegeln des elektrochemischen Elementes in einer solchen Umgebung mit entsprechend eingestellten und gewählten Parametern bewirken.

Die Schichtfolgen der elektrochemischen Bauelemente können in beliebiger Form angeordnet werden. Beispielsweise können die flexiblen Schichtverbünde aufgerollt werden, wodurch eine besonders vorteilhafte Geometrie für kompakte Akkumulatoren erzielt wird. Bei kleinem Bauvolumen des Akkumulators ist hier eine sehr große batterieaktive Fläche vorhanden. **Figur 2** zeigt eine solche Ausgestaltung, wobei die Bezugszeichen 1 bis 7 die für Figur 1 genannten Bedeutungen besitzen und Bezugszeichen 8 eine Isolatorschicht bezeichnet. Nicht-selbsttragende Schichtverbünde können auch auf festen Untergründen wie Wänden zur integrierten Energiespeicherung aufgetragen werden (selbsttragende Folienverbände können natürlich ebenfalls aufgebracht bzw. aufgeklebt werden). Hier können große Flächen ausgenutzt werden; ein eigener Raumbedarf für die Akkumulatoren ist nicht gegeben. Ein spezielles Beispiel für eine derartige Ausgestaltung ist die Integration von Schichtverbünden für Akkumulatoren in Substrate für Solarzellen. Hierdurch können autarke Energieversorgungseinheiten geschaffen werden. Schichtsequenzen für Akkumulatoren können auch auf feste oder flexible Substrate aufgebracht werden, um in elektronischen Aufbauten der integrierten Energiespeicherung zu dienen.

Die Erfindung soll nachstehend anhand von Beispiele näher erläutert werden.

Beispiel 1

Herstellung einer Primärbatterie

Für die Anode werden 7g Zinkpulver, für den Elektrolyten 5g $SiO_2$ und für die Kathode 7g $MnO_2$ mit je 1g PVDF-HFP, 1,5g Dibutylphthalat und 10g Aceton vermischt. Die Elektroden und der Elektrolyt werden zu Tapes ausgezogen, das Aceton verdampft und der Plastifizierer mit Hexan herausgelöst. Die Tapes werden mit wässrig-alkoholischer KOH Lösung (Lösungsmittel: 50% Wasser, 50% Alkohol) befüllt und zwischen zwei Edelstahlelektroden gepreßt.

Beispiel 2

Herstellung einer Sekundärbatterie

Für die Anode werden 7g $Cd(OH)_2$, für den Elektrolyten 5g $SiO_2$ und für die Kathode 7g $Ni(OH)_2$ mit je 1g PVDF-HFP, 1,5g Dibutylphthalat und 10g Aceton vermischt. Die Elektroden und der Elektrolyt werden zu Tapes ausgezogen, das Aceton verdampft und der Plastifizierer mit Hexan herausgelöst. Die Tapes werden mit wässrig-alkoholischer KOH Lösung (Lösungsmittel: 70% Wasser, 30% Alkohol) befüllt und zwischen zwei Edelstahlelektroden gepreßt.

**Patentansprüche**

1.   Verfahren zur Herstellung zumindest einer Elektrolytschicht einer elektrochemischen Zelle, wobei das Verfahren umfasst:

   a. Verarbeiten einer Matrix, welche mindestens ein organisches Polymer, eine Vorstufe davon oder ein Präpolymer davon enthält, eines Lösungsmittels für das mindestens eine organische Polymer und eines pulverförmigen Feststoffs zu einer pastösen Masse;
   b. Verfestigen der pastösen Masse und Erzeugen einer Schicht aus der pastösen Masse;
   c. Hinzufügen einer ionenleitenden Flüssigkeit zu der aus der verfestigten pastösen Masse erzeugten Schicht, wobei die ionenleitende Flüssigkeit ein Elektrolyt ist dem ein Alkohol oder ein anderes polares, mit Wasser mischbares organisches Lösungsmittel bis zu einem Gehalt von nicht mehr als 70 Vol % zugesetzt wird.

2.   Verfahren nach Anspruch 1, wobei das organische Polymer einen fluorierten Kohlenwasserstoff-Polymer, insbesondere Poylvinyidenfluorid umfasst.

3.   Verfahren nach Anspruch 1 oder 2, wobei das organische Polymer ein Co- oder Homopolymer ist.

4.   Verfahren nach einem der Ansprüche 1 bis 3, wobei die erzeugte Schicht eine selbsttragende Schicht ist.

5.   Verfahren nach einem der Ansprüche 1 bis 4, wobei das Verfestigen ein Abdampfen des Lösungsmittels umfasst.

6.   Verfahren nach einem der Ansprüche 1 bis 5, zudem umfassend Verbinden der erzeugten Schicht mit zumindest einem weiteren Bestandteil mittels Laminieren.

7.   Batterie mit einer Elektrolytschicht, hergestellt mit dem Verfahren nach einem der Ansprüche 1 bis 6.

**Claims**

1. A method for manufacturing at least one electrolyte layer of an electrochemical cell, the method comprising:

   a. processing a matrix containing at least one organic polymer, a precursor or a prepolymer thereof, a solvent for the at least one organic polymer, and a pulverulent solid to a pasty mass;
   b. solidifying the pasty mass and generating a layer of the pasty mass;
   c. adding an ion-conducting liquid to the layer generated of the solidified pasty mass, wherein the ion-conducting liquid is an electrolyte, to which an alcohol or another polar, water mixable organic solvent is added up to a content of not more than 70 vol. %.

2. The method according to claim 1, wherein the organic polymer comprises a fluorinated hydrocarbon polymer, in particular a polyvinylidenfluorid.

3. The method according to claim 1 or 2, wherein the organic polymer is a co-or homopolymer.

4. The method according to one of the claims 1 to 3, wherein the generated layer is a self-supporting layer.

5. The method according to one of the claims 1 to 4, wherein the solidifying comprises an evaporation of the solvent.

6. The method according to one of the claims 1 to 5, further comprising a connecting of the generated layer with at least one other component by lamination.

7. A battery having an electrolyte layer, manufactured by the method according to anyone of the claims 1 to 6.

**Revendications**

1. Procédé de fabrication d'au moins une couche d'électrolyte d'une cellule électrochimique, le procédé comprenant les étapes de :

   a) traitement d'une matrice comprenant au moins un polymère organique, un précurseur de celui-ci ou un prépolymère de celui-ci, un solvant pour le moins un polymère organique et un solide pulvérulent en une masse pâteuse ;
   b) solidification de la masse pâteuse et formation d'une couche à partir de la masse pâteuse ;
   c) ajout d'un liquide conducteur d'ion à la couche formée à partir de la masse pâteuse solidifiée, dans lequel le liquide conducteur d'ion est un électrolyte auquel est ajouté un alcool ou un autre solvant organique polaire miscible dans l'eau jusqu'à une quantité qui ne dépasse pas 70% en volume.

2. Procédé selon la revendication 1, dans lequel le polymère organique comprend un polymère hydrocarboné fluoré, en particulier comprend un polyfluorure de vinylidène.

3. Procédé selon la revendication 1 ou 2, dans lequel le polymère organique est un copolymère ou un homopolymère.

4. Procédé selon l'une quelconque des revendications 1 à 3, dans lequel la couche formée est une couche autoporteuse.

5. Procédé selon l'une quelconque des revendications 1 à 4, dans lequel la solidification comprend l'évaporation du solvant.

6. Procédé selon l'une quelconque des revendications 1 à 5, comprenant en outre une liaison de la couche formée avec au moins un autre composant par laminage.

7. Batterie avec une couche d'électrolyte fabriquée par le procédé selon l'une quelconque des revendications 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5456000 A
- WO 9944245 A
- US 5728489 A